# EUROPEAN PATENT SPECIFICATION

(11) **EP 2 512 073 B1**
(45) Date of publication and mention of the grant of the patent: **06.11.2019**
(21) Application number: 10835416.8
(22) Date of filing: 14.09.2010
(51) Int. Cl.: H04L 12/24

(54) **METHOD AND APPARATUS FOR MAINTAINING A ROUTING TABLE**
VERFAHREN UND APPARAT ZUR BEWAHRUNG EINER ROUTINGTABELLE
PROCÉDÉ ET APPAREIL PERMETTANT DE CONSERVER UNE TABLE DE ROUTAGE

(30) Priority: 08.12.2009 CN 200910242132
(43) Date of publication of application: 17.10.2012
(73) Proprietor: ZTE Corporation, Shenzhen, Guangdong 518057 (CN)
(72) Inventor: PAN, Tingshan, Guangdong 518057 (CN)
(74) Representative: Novagraaf Technologies
(86) International application number: PCT/CN2010/076916
(87) International publication number: WO 2011/069381

(56) References cited:
- CN-A- 1 701 577
- CN-A- 1 932 818
- CN-A- 101 005 461
- CN-A- 101 741 737
- US-A1- 2002 131 432
- US-A1- 2008 189 769
- US-A1- 2008 192 754

## Description

### Field of the Invention

The present invention relates to a technique for maintaining a routing table, and in particular to a method and an apparatus for maintaining a routing table based on Ternary Content Addressable Memory (TCAM).

### Background of the Invention

With the rapid popularization of the Internet and the rapid development of routers and the routing switch technology, the routing query technology is the main bottleneck which restricts improvement of network performance. The switch chip in a routing switch device generally adopts Hash query as a looking-up approach for looking up a host routing table, but a subnet routing table is looked up in parallel by a TCAM, thus solving the problem that the efficiency of routing query is relatively low.

Currently, routing query based on TCAM is a popular high-speed routing query technology. The TCAM query, which has advantages of high speed and simple operation, also has relatively obvious disadvantages: high cost, high power consumption and complex algorithm (involving moving route items in the TCAM and it is required to ensure that the longest matched subnet route is in front of the TCAM). In addition, there are less subnet routes than host routes in practical use. Therefore, the subnet routes supported within switch chip generally are relatively less, but the quantity of host routes are relatively more. Even if there are 32K host routes, the problem of Hash collision is still serious. How to realize maintenance of a routing table is of great importance for routing query and for solving Hash collision among routes. Currently, the existing route maintenance methods fail to ensure the efficiency of routing query while solving the problem of Hash collision among routes.

Document US 2008/189769 A1 discloses method for operating a packet switching network and associated elements. Document US 2002/131432 A1 discloses method and apparatus for ternary content addressable memory (TCAM) table management. However, the above mentioned problem still remains unsolved.

### Summary of the Invention

The invention is defined by the independent claims. Embodiments are defined by dependent claims. In view of this, the present invention is to provide a method and an apparatus for maintaining a routing table to avoid the problem of Hash collision in the routing table while ensuring the efficiency of routing query.

In order to achieve the above purpose, the technical solution of the present invention is realized by:
a method for maintaining a routing table, comprising:
   when the Hash value of a to-be-added host route collides with that of a route in a host routing table, adding the to-be-added host route into a TCAM.

The method further comprises:
when host routes and subnet routes are stored in the TCAM, different TCAM resource sections being occupied by the host routes and the subnet routes, respectively

The step of adding the to-be-added host route to the TCAM specifically comprises:
judging whether idle resources exist in the TCAM, and if the judgment result is yes, further judging whether idle resources exist among all host routes in the TCAM, or between the last host route and the first subnet route in the TCAM; if the idle resources exist among all host routes in the TCAM, or between the last host route and the first subnet route in the TCAM, adding the to-be-added host route into the first idle resource of the TCAM; if the idle resources do not exist among all host routes in the TCAM, or between the last host route and the first subnet route in the TCAM, storing the subnet routes into the TCAM resources of the TCAM starting from the last TCAM resource of the TCAM sequentially, and adding the to-be-added host route into the first idle resource of the TCAM after storing the subnet routes.

Preferably, the step of storing the subnet routes into the TCAM resources of the TCAM starting from the last TCAM resource of the TCAM sequentially comprises:
sequencing subnet routes according to the prefix of each subnet route, wherein the longer the prefix of the subnet route is, the front the position where the subnet route is stored in the TCAM is; and
as for the subnet routes with the same prefix, the subnet route with the longer matched length is stored at the front position in the TCAM.

Preferably, the method further comprises:
judging whether idle resources exist in the TCAM when a subnet route is added, and if the judgment result is yes, further judging whether idle resources exist among all subnet routes in the TCAM, or between the last host route and the first subnet route in the TCAM; if the idle resources exist among all subnet routes in the TCAM, or between the last host route and the first subnet route in the TCAM, adding the to-be-added subnet route into the first idle resource of the TCAM; if the idle resources do not exist among all host routes in the TCAM, or between the last host route and the first subnet route in the TCAM, storing the host routes into the TCAM resources of the TCAM starting from the first TCAM resource of the TCAM sequentially, and adding the to-be-added subnet route into the first idle resource of the TCAM after storing the host routes.

An apparatus for maintaining a routing table comprises a determining unit and an adding unit, wherein
the determining unit is configured to determine whether the Hash value of a to-be-added host route collides with that of a route in a host routing table and if the determine result is yes, trigger the adding unit; and
the adding unit is configured to add the to-be-added host route into a TCAM.

Preferably, when host routes and subnet routes are stored in the TCAM, different TCAM resource sections are occupied by the host routes and the subnet routes, respectively.

Preferably, the apparatus further comprises a first judging unit, a second judging unit and a first arranging unit, wherein
the first judging unit is configured to judge whether idle resources exist in the TCAM and if the judgment result is yes, trigger the second judging unit;
the second judging unit is configured to judge whether idle resources exist among all host routes in the TCAM, or between the last host route and the first subnet route in the TCAM; if the idle resources exist among all host routes in the TCAM, or between the last host route and the first subnet route in the TCAM, trigger the adding unit to add the to-be-added host route into the first idle resource of the TCAM; if the idle resources do not exist among all host routes in the TCAM, or between the last host route and the first subnet route in the TCAM, trigger the first arranging unit; and
the first arranging unit is configured to store the subnet routes into the TCAM resources of the TCAM starting from the last TCAM resource sequentially, and after storing the subnet routes, trigger the adding unit to add the to-be-added host route into the first idle resource of the TCAM.

Preferably, the first arranging unit is further configured to sequence subnet routes according to the prefix of each subnet route; wherein the longer the prefix of the subnet route is, the front the position where the subnet route is stored in the TCAM is; and as for the subnet routes with the same prefix, the subnet route with the longer matched length is stored at the front position in the TCAM.

Preferably, the apparatus further comprises a third judging unit, a fourth judging unit and a second arranging unit, wherein
the third judging unit is configured to judge whether idle resources exist in the TCAM when a subnet route is added, and if the judgment result is yes, trigger the fourth judging unit;
the fourth judging unit is configured to judge whether idle resources exist among all subnet routes in the TCAM, or between the last host route and the first subnet route in the TCAM, if the idle resources exist among all subnet routes in the TCAM, or between the last host route and the first subnet route in the TCAM, trigger the adding unit to add the to-be-added subnet route into the first idle resource of the TCAM; if the idle resources do not exist among all host routes in the TCAM, or between the last host route and the first subnet route in the TCAM, trigger the second arranging unit; and
the second arranging unit is configured to store the host routes into the TCAM resources of the TCAM starting from the first TCAM resource of the TCAM sequentially, and to trigger the adding unit after storing the host routes to add the to-be-added subnet route into the first idle resource of the TCAM.

In the present invention, when the Hash value of a to-be-added host route collides with that of a route in the current host routing table, the to-be-added host route is added into a TCAM, thus solving the problem of Hash collision among the host routes. In this way, as for the host routes, the query for the host routes can be realized by the Hash values, and as for the subnet routes, it is only needed to perform TCAM parallel query. The method for maintaining a routing table in the present invention solves the problem of Hash collision among the host routes, and greatly improves the efficiency of routing query.

### Brief Description of the Drawings

Fig. 1 is a flowchart illustrating a method for adding a host route in the present invention;
Fig. 2 is a flowchart illustrating a method for adding a subnet route on the basis of Fig. 1;
Fig. 3 is a schematic diagram illustrating addition of a route in a TCAM; and
Fig. 4 is a schematic diagram illustrating structural composition of an apparatus for maintaining a routing table in the present invention.

### Detailed Description of the Embodiments

The basic idea of the present invention is as follows: when the Hash value of a to-be-added host route collides with that of a route in the current host routing table, the to-be-added host route is added into a TCAM, thus solving the problem of Hash collision among the host routes. In this way, as for the host routes, the query for the host routes can be realized by the Hash values, and as for the subnet routes, it is only needed to perform TCAM parallel query. The method for maintaining a routing table in the present invention solves the problem of Hash collision among the host routes, and greatly improves the efficiency of routing query.

In order to make the purpose, technical solution and advantages of the present invention clearer, the present invention is further described in detail as below by means of embodiments and with reference to the accompanying drawings.

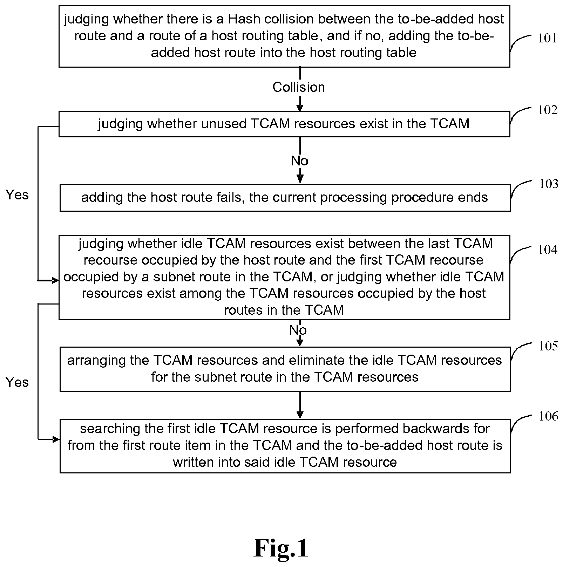

Fig. 1 is a flowchart illustrating a method for adding a host route in the present invention. As shown in Fig. 1, the method for adding a host route in this example comprises the following steps.

Step 101: when a host route is added into a routing table, judging whether there is a Hash collision between the to-be-added host route and a route of a host routing table in the bottom, if there is no Hash collision, adding the to-be-added host route into a host routing table in the routing table directly without necessity of performing the subsequent steps; and if there is a Hash collision returned by the host routing table, performing Step 102.

Step 102: judging whether unused TCAM resources exist in the TCAM, namely, judging whether null route item exists in the TCAM, if there are no available idle resources in the current TCAM resources, performing Step 103, and if there are still available idle resources in the current TCAM resources, performing Step 104.

Step 103: adding the host route fails, there is a Hash collision in the host route, and there is no resource in the TCAM to store the host route, so the current processing procedure ends.

Step 104: judging whether idle TCAM resources exist between the last TCAM recourse occupied by the host route and the first TCAM recourse occupied by a subnet route in the TCAM, or judging whether idle TCAM resources exist among the TCAM resources occupied by the host routes in the TCAM, and performing Step 106 if either of the above conditions is satisfied; otherwise, performing Step 105.

Step 105: arranging the TCAM resources and eliminating the idle TCAM resources for the subnet route in the TCAM resources to ensure that all subnet routes occupy the TCAM resources continuously starting from the last TCAM resource of the TCAM, and to ensure that the longest matched subnet route is stored in the front position in the TCAM as for the subnet routes with the same prefix, then performing Step 106 after arranging the TCAM resources.

Step 106: there is a Hash collision in the host route, and the available idle resources exist in the TCAM, therefore searching the first idle TCAM resource is performed backwards from the first route item in the TCAM and the to-be-added host route is written into said idle TCAM resource (the mask should be written as 255.255.255.255), then adding the host route is successful. The current processing procedure ends;

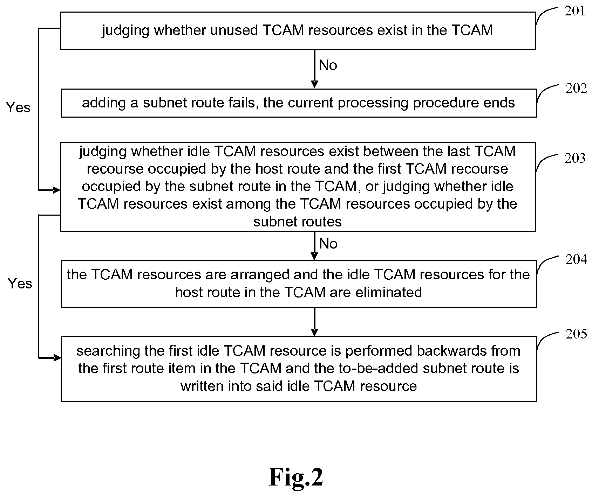

Fig. 2 is a flowchart illustrating a method for adding a subnet route on the basis of Fig. 1. As shown in Fig. 2, the method for adding a subnet route in this example comprises the following steps.

Step 201: it is judged whether unused TCAM resources exist in the TCAM, if there are no available idle resources in the current TCAM resources, performing Step 202, and if there are available idle resources in the current TCAM resources, performing Step 203.

Step 202: adding a subnet route fails, and the current processing procedure ends.

Step 203: it is judged whether idle TCAM resources exist between the last TCAM recourse occupied by the host route and the first TCAM recourse occupied by the subnet route in the TCAM, or it is judged whether idle TCAM resources exist among the TCAM resources occupied by the subnet routes, and Step 205 is performed if either of the above conditions is satisfied; otherwise, Step 204 is performed.

Step 204: the TCAM resources are arranged, the idle TCAM resources for the host route in the TCAM are eliminated, and it is ensured that all host routes occupy the TCAM resource continuously starting from the first TCAM resource of the TCAM, and Step 205 is performed after arranging the TCAM resources.

Step 205: searching the first idle TCAM resource is performed backwards from the first route item in the TCAM and the to-be-added subnet route is written into said idle TCAM resource, then adding the subnet route is successful. The current processing procedure ends.

The technical solution of the present invention is described again by specific examples as below.

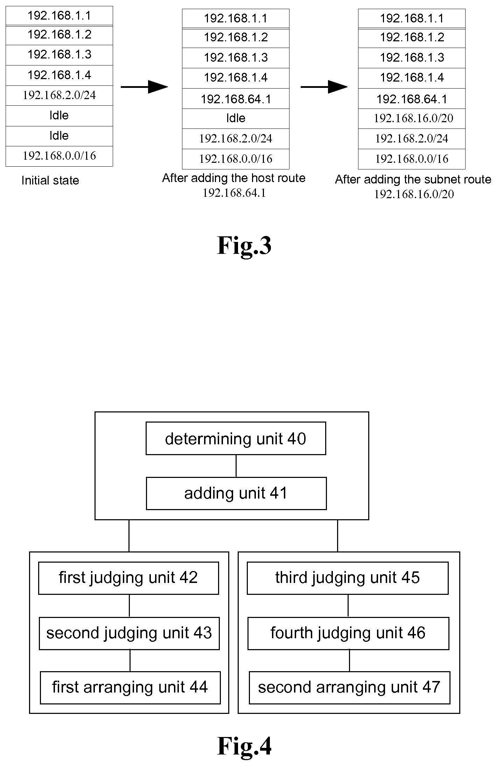

Fig. 3 is a schematic diagram illustrating addition of a route in a TCAM. As shown in Fig. 3, it is provided that there is a host routing table of a switch with 16K in the mode of the routing query of using Hash values, and there are subnet routing tables with 8K (only for facilitating the description) in the mode of the routing query of TCAM parallel query. Moreover it is provided that there is one host route 192.168.64.1 to be added currently and there is one subnet route 192.168.16.0/20 to be added as well. In addition, it is provided that the host route 192.168.0.1 has been added into a host routing table, and the usage status of the TCAM resources is as follows: the TCAM resources 1, 2, 3 and 4 are occupied by other host routes (192.168.1.1-4), and the TCAM resources 5 and 8 are occupied by other subnet routes (192.168.2.0/24, 192.168.0.0/16).

When the host route 192.168.64.1 is added, a Hash collision with the host route 192.168.0.1 in the current host routing table is found, so this host route (192.168.64.1) has to be stored in the TCAM resources for the subnet routes. Since 6 TCAM resources have been used in the current TCAM and there are 8 TCAM resources in total in the current TCAM, it is possible to add routes.

As shown in Fig. 3, the host route is written into the TCAM because of the Hash collision. Since there have been 4 host routes in the TCAM already and there are no idle TCAM resources among these 4 host routes, and in addition, the host routes occupy the first 4 TCAM resources in the TCAM, the first resource occupied by the subnet routes in the TCAM is the TCAM resource 5 and there are no idle TCAM resources between the TCAM resource 4 and the TCAM resource 5, therefore, it is needed to arrange the TCAM.

The TCAM resources in the TCAM are arranged, namely, subnet routes are sequenced according to the prefix of each subnet route, wherein the longer the prefix of the subnet route is, the front the position where the subnet is stored in the TCAM is; and as for the subnet routes with the same prefix, the subnet route with the longer matched length is stored at the front position in the TCAM. The usage status of the arranged TCAM resources is as follows: the TCAM resources 1, 2, 3 and 4 are occupied by other host routes (the mode of 192.168.1.1-4 occupying the TCAM resources remains unchanged), and the TCAM resources 7 and 8 are occupied by other subnet routes (192.168.2.0/24, 192.168.0.0/16).

Idle TCAM resources are searched from the TCAM resource 1. The TCAM resource 5 is found idle, and then the host route 192.168.64.1 is written into the TCAM resource 5.

The usage status of the TCAM after the addition is that: the TCAM resources 1, 2, 3 and 4 are occupied by other host routes (192.168.1.1-4); the TCAM resource 5 is occupied by the host route 192.168.64.1; the TCAM resources 7 and 8 are occupied by other subnet routes (192.168.2.0/24, 192.168.0.0/16); and the TCAM resource 6 is an idle resource.

7 TCAM resources in the TCAM have been used, and the total number of the resources is 8, therefore, there is 1 remaining resource into which the 192.168.16.0/20 can be added. At the moment, the idle resource 6 exists between TCAM resource occupied by the host route and the TCAM resource occupied by the subnet route, therefore the subnet route 192.168.16.0/20 is added into the TCAM resource 6.

Since there are 3 subnet routes with the prefix of 192 in the TCAM resources, it is needed to perform sequencing to ensure that the longest matched subnet route is located at a front position in the TCAM. Then the usage status of the sequenced TCAM is as follows: TCAM resources 1, 2, 3 and 4 are occupied by other host routes (192.168.1.1-4), the TCAM resource 5 is occupied by the host route 192.168.64.1, the TCAM resources 6, 7 and 8 are occupied by other subnet routes (192.168.2.0/24, 192.168.16.0/20, 192.168.0.0/16), as shown in Fig. 3.

Fig. 4 is a schematic diagram illustrating structural composition of an apparatus for maintaining a routing table in the present invention. As shown in Fig. 4, the apparatus for maintaining a routing table of the present invention comprises a determining unit 40 and an adding unit 41, wherein the determining unit 40 is configured to determine whether the Hash value of a to-be-added host route collides with that of a route in a host routing table and if the determine result is yes, trigger the adding unit 41; and the adding unit 41 is configured to add the to-be-added host route into a TCAM.

When host routes and subnet routes are stored in the TCAM, different TCAM resource sections are occupied by the host routes and the subnet routes, respectively.

As shown in Fig. 4, the apparatus for maintaining a routing table of the present invention further comprises a first judging unit 42, a second judging unit 43 and a first arranging unit 44, wherein the first judging unit 42 is configured to judge whether idle resources exist in the TCAM and if the judgment result is yes, trigger the second judging unit 43; the second judging unit 43 is configured to judge whether idle resources exist among all host routes in the TCAM, or between the last host route and the first subnet route in the TCAM; if the idle resources exist among all host routes in the TCAM, or between the last host route and the first subnet route in the TCAM, trigger the adding unit 41 to add the to-be-added host route into the first idle resource of the TCAM; if the idle resources do not exist among all host routes in the TCAM, or between the last host route and the first subnet route in the TCAM, trigger the first arranging unit 44; and the first arranging unit 44 is configured to store the subnet routes into the TCAM resources of the TCAM starting from the last TCAM resource sequentially, and after storing the subnet routes, trigger the adding unit 41 to add the to-be-added host route into the first idle resource of the TCAM. In the above, the first arranging unit 44 is configured to sequence subnet routes according to the prefix of each subnet route; wherein the longer the prefix of the subnet route is, the front the position where the subnet route is stored in the TCAM is; and as for the subnet routes with the same prefix, the subnet route with the longer matched length is stored at the front position in the TCAM.

As shown in Fig. 4, the apparatus for maintaining a routing table in the present invention further comprises a third judging unit 45, a fourth judging unit 46 and a second arranging unit 47, wherein the third judging unit 45 is configured to judge whether idle resources exist in the TCAM when a subnet route is added, and if the judgment result is yes, trigger the fourth judging unit 46; the fourth judging unit 46 is configured to judge whether idle resources exist among all subnet routes in the TCAM, or between the last host route and the first subnet route in the TCAM, if the idle resources exist among all subnet routes in the TCAM, or between the last host route and the first subnet route in the TCAM, trigger the adding unit 41 to add the to-be-added subnet route into the first idle resource of the TCAM; if the idle resources do not exist among all host routes in the TCAM, or between the last host route and the first subnet route in the TCAM, trigger the second arranging unit 47; and the second arranging unit is configured to store the host routes into the TCAM resources of the TCAM starting from the first TCAM resource sequentially, and to trigger the adding unit 41 after storing the host routes to add the to-be-added subnet route into the first idle resource of the TCAM.

Those skilled in the art should understand that the apparatus for maintaining a routing table in Fig. 4 is designed to achieve the above-mentioned method for maintaining a routing table. The function of each processing unit of the system as shown in Fig. 4 can be understood referring to the description of the above-mentioned method, and can be achieved by programs running on a processor or by a specific logic circuit. Those skilled in the art should understand that, except the determining unit 40 and the adding unit 41, other processing units are not essential technical features for realizing the basic technical solution of the present invention.

The above-mentioned description is only the preferred embodiment of the present invention and not intended to limit the scope of protection of the present invention.

## Claims

1. A method for maintaining a routing table, the method comprising the following steps:
when the Hash value of a to-be-added host route collides with the hash value of a route in a host routing table, then adding the to-be-added host route into a Ternary Content Addressable Memory, TCAM;
storing host routes and subnet routes in different TCAM resource sections;
**characterized in that** the step of adding the to-be-added host route into the TCAM specifically comprises:
judging whether idle resources exist in the TCAM, and if the judgment result is yes, further judging whether idle resources exist among all TCAM resources occupies by the host routes, or between the last TCAM resource occupied by the host route and the first TCAM resource occupied by the subnet route; and
if the idle resources exist among all TCAM resources occupies by the host routes, or between the last TCAM resources occupies by the host route and the first TCAM resources occupies by the subnet route, then adding the to-be-added host route into the first idle resource of the TCAM; or
if the idle resources do not exist among all TCAM resources occupies by the host routes, or between the last TCAM resources occupies by the host route and the first TCAM resources occupies by the subnet route, then storing the subnet routes into the TCAM resources of the TCAM starting from the last TCAM resource of the TCAM sequentially, and adding the to-be-added host route into the first idle resource of the TCAM after storing the subnet routes.

2. The method according to claim 1, **characterized in that** the step of storing the subnet routes into the TCAM resources of the TCAM starting from the last TCAM resource of the TCAM sequentially comprises:
sequencing subnet routes according to the prefix of each subnet route, wherein the longer the prefix of the subnet route is, the front the position where the subnet route is stored in the TCAM is; and
as for the subnet routes with the same prefix, the subnet route with the longer matched length is stored at the front position in the TCAM.

3. The method according to claim 1, **characterized in that** the method further comprises:
judging whether idle resources exist in the TCAM when a subnet route is added, and if the judgment result is yes, further judging whether idle resources exist among all TCAM resource occupied by the subnet routes, or between the last TCAM resource occupied by the host route and the first TCAM resource occupied by the subnet route; if the idle resources exist among all TCAM resource occupied by the subnet routes, or between the last TCAM resource occupied by the host route and the first TCAM resource occupied by the subnet route, adding the to-be-added subnet route into the first idle resource of the TCAM; if the idle resources do not exist among all TCAM resource occupied by the subnet routes, or between the last TCAM resource occupied by the host route and the first TCAM resource occupied by the subnet route, then storing the host routes into the TCAM resources of the TCAM starting from the first TCAM resource of the TCAM sequentially, and adding the to-be-added subnet route into the first idle resource of the TCAM after storing the host routes.

4. An apparatus for maintaining a routing table, the apparatus comprising a determining unit (40) and an adding unit (41), wherein
the determining unit (40) is configured to determine whether the Hash value of a to-be-added host route collides with the hash value of a route in a host routing table and if the determine result is yes, trigger the adding unit (41); and
the adding unit (41) is configured to add the to-be-added host route into a Ternary Content Addressable Memory, TCAM;
**characterized in that** the host routes and subnet routes are stored different TCAM resource sections, and **in that** the apparatus further comprises a first judging unit (42), a second judging unit (43) and a first arranging unit (44), wherein
the first judging unit (42) is configured to judge whether idle resources exist in the TCAM and if the judgment result is yes, trigger the second judging unit (43);
the second judging unit (43) is configured to judge whether idle resources exist among all TCAM resources occupied by host routes, or between the last TCAM resources occupied by host route and the first TCAM resources occupied by subnet route; and, if the idle resources exist among all TCAM resources occupied by host routes, or between the last TCAM resources occupied by host route and the first TCAM resources occupied by subnet route, trigger the adding unit (41) to add the to-be-added host route into the first idle resource of the TCAM; if the idle resources do not exist among all TCAM resources occupied by host routes, or between the last TCAM resources occupied by host route and the first TCAM resources occupied by subnet route, then trigger the first arranging unit (44); and
the first arranging unit (44) is configured to store the subnet routes into the TCAM resources of the TCAM starting from the last TCAM resource sequentially, and after storing the subnet routes, trigger the adding unit (41) to add the to-be-added host route into the first idle resource of the TCAM.

5. The apparatus according to claim 4, **characterized in that** the first arranging unit (44) is further configured to sequence subnet routes according to the prefix of each subnet route; wherein the longer the prefix of the subnet route is, the front the position where the subnet route is stored in the TCAM is; and as for the subnet routes with the same prefix, the subnet route with the longer matched length is stored at the front position in the TCAM.

6. The apparatus according to claim 5, **characterized in that** the apparatus further comprises a third judging unit (45), a fourth judging unit (46) and a second arranging unit (47), wherein
the third judging unit (45) is configured to judge whether idle resources exist in the TCAM when a subnet route is added, and if the judgment result is yes, trigger the fourth judging unit (46);
the fourth judging unit (46) is configured to judge whether idle resources exist among all TCAM resource occupied by the subnet routes, or between the last TCAM resource occupied by the host route and the first TCAM resource occupied by the subnet route, if the idle resources exist among all TCAM resource occupied by the subnet routes, or between the last TCAM resource occupied by the host route and the first TCAM resource occupied by the subnet route, trigger the adding unit (41) to add the to-be-added subnet route into the first idle resource of the TCAM; if the idle resources do not exist among all TCAM resource occupied by the subnet routes, or between the last TCAM resource occupied by the host route and the first TCAM resource occupied by the subnet route, trigger the second arranging unit (47); and
the second arranging unit (47) is configured to store the host routes into the TCAM resources of the TCAM starting from the first TCAM resource of the TCAM sequentially, and to trigger the adding unit (41) after storing the host routes to add the to-be-added subnet route into the first idle resource of the TCAM.

## Patentansprüche

1. Verfahren zum Unterhalten einer Routing-Tabelle, wobei das Verfahren die folgenden Schritte umfasst:
wenn der Hash-Wert einer hinzuzufügenden Host-Route mit dem Hash-Wert einer Route in einer Host-Routing-Tabelle kollidiert, dann Hinzufügen der hinzuzufügenden Host-Route in einen Ternary Content Addressable Memory, TCAM;
Speichern von Host-Routen und Subnetz-Routen in unterschiedlichen TCAM-Ressourcenabschnitten;
**dadurch gekennzeichnet, dass** der Schritt des Hinzufügens der hinzuzufügenden Host-Route in den TCAM spezifisch umfasst:
Beurteilen, ob ungenutzte Ressourcen im TCAM existieren, und wenn das Beurteilungsergebnis Ja lautet, weiter Beurteilen, ob unter allen TCAM-Ressourcen, die von den Host-Routen belegt werden, oder zwischen der letzten TCAM-Ressource, die von der Host-Route belegt wird, und der ersten TCAM-Ressource, die von der Subnetz-Route belegt wird, ungenutzte Ressourcen existieren; und
wenn die ungenutzten Ressourcen unter allen TCAM-Ressourcen, die von den Host-Routen belegt werden, oder zwischen den letzten TCAM-Ressourcen, die von der Host-Route belegt werden, und den ersten TCAM-Ressourcen, die von der Subnetzroute belegt werden, existieren, dann Hinzufügen der hinzuzufügenden Host-Route in die erste ungenutzte Ressource des TCAM; oder
wenn die ungenutzten Ressourcen nicht unter allen TCAM-Ressourcen, die von den Host-Routen belegt werden, oder zwischen den letzten TCAM-Ressourcen, die von der Host-Route belegt werden, und den ersten TCAM-Ressourcen, die von der Subnetz-Route belegt werden, existieren, dann sequentielles Speichern der Subnetz-Routen in den TCAM-Ressourcen des TCAM beginnend ab der letzten TCAM-Ressource des TCAM, und Hinzufügen der hinzuzufügenden Host-Route in die erste ungenutzte Ressource des TCAM nach Speichern der Subnetz-Routen.

2. Verfahren nach Anspruch 1, **dadurch gekennzeichnet, dass** der Schritt des sequentiellen Speicherns der Subnetz-Routen in den TCAM-Ressourcen des TCAM beginnend ab der letzten TCAM-Ressource des TCAM umfasst:
Sequenzieren von Subnetz-Routen gemäß dem Präfix jeder Subnetz-Route, wobei je länger das Präfix der Subnetz-Route ist, desto weiter vorne die Position liegt, an der die Subnetz-Route im TCAM gespeichert wird; und
was die Subnetz-Routen mit demselben Präfix anbelangt, die Subnetz-Route mit der längeren abgeglichenen Länge an der vordersten Position im TCAM gespeichert wird.

3. Verfahren nach Anspruch 1, **dadurch gekennzeichnet, dass** das Verfahren weiter umfasst:
Beurteilen, ob ungenutzte Ressourcen im TCAM existieren, wenn eine Subnetz-Route hinzugefügt wird, und wenn das Beurteilungsergebnis Ja lautet, weiter Beurteilen, ob ungenutzte Ressourcen unter allen TCAM-Ressourcen, die von den Subnetz-Routen belegt werden, oder zwischen der letzten TCAM-Ressource, die von der Host-Route belegt wird, und der ersten TCAM-Ressource, die von der Subnetz-Route belegt wird, existieren; wenn die ungenutzten Ressourcen unter allen TCAM-Ressourcen, die von den Subnetz-Routen belegt werden, oder zwischen der letzten TCAM-Ressource, die von der Host-Route belegt wird, und der ersten TCAM-Ressource, die von der Subnetz-Route belegt wird, existieren, Hinzufügen der hinzuzufügenden Subnetz-Route in die erste ungenutzte Ressource des TCAM; wenn die ungenutzten Ressourcen nicht unter allen TCAM-Ressourcen, die von den Subnetz-Routen belegt werden, oder zwischen der letzten TCAM-Ressource, die von der Host-Route belegt wird, und der ersten TCAM-Ressource, die von der Subnetz-Route belegt wird, existieren, dann sequentielles Speichern der Host-Routen in den TCAM-Ressourcen des TCAM beginnend ab der ersten TCAM-Ressource des TCAM, und Hinzufügen der hinzuzufügenden Subnetz-Route in die erste ungenutzte Ressource des TCAM nach Speichern der Host-Routen.

4. Vorrichtung zum Unterhalten einer Routing-Tabelle, wobei die Vorrichtung eine Bestimmungseinheit (40) und eine Hinzufügeeinheit (41) umfasst, wobei
die Bestimmungseinheit (40) dazu konfiguriert ist, zu bestimmen, ob der Hash-Wert einer hinzuzufügenden Host-Route mit dem Hash-Wert einer Route in einer Host-Routing-Tabelle kollidiert, und wenn das Bestimmungsergebnis Ja lautet, die Hinzufügeeinheit (41) zu triggern; und
die Hinzufügeeinheit (41) dazu konfiguriert ist, die hinzuzufügende Host-Route in einen Ternary Content Addressable Memory, TCAM, hinzuzufügen;
**dadurch gekennzeichnet, dass** die Host-Routen und Subnetz-Routen in unterschiedlichen TCAM-Ressourcenabschnitten gespeichert werden, und dadurch, dass die Vorrichtung weiter eine erste Beurteilungseinheit (42), eine zweite Beurteilungseinheit (43) und eine erste Anordnungseinheit (44) umfasst, wobei
die erste Beurteilungseinheit (42) dazu konfiguriert ist, zu beurteilen, ob ungenutzte Ressourcen im TCAM existieren, und wenn das Beurteilungsergebnis Ja lautet, die zweite Beurteilungseinheit (43) zu triggern;
die zweite Beurteilungseinheit (43) dazu konfiguriert ist, zu beurteilen, ob unter allen TCAM-Ressourcen, die von Host-Routen belegt werden, oder zwischen den letzten TCAM-Ressourcen, die von einer Host-Route belegt werden, und den ersten TCAM-Ressourcen, die von einer Subnetz-Route belegt werden, ungenutzte Ressourcen existieren; und wenn die ungenutzten Ressourcen unter allen TCAM-Ressourcen, die von Host-Routen belegt werden, oder zwischen den letzten TCAM-Ressourcen, die von einer Host-Route belegt werden, und den ersten TCAM-Ressourcen, die von einer Subnetzroute belegt werden, existieren, die Hinzufügeeinheit (41) so zu triggern, dass sie die hinzuzufügende Host-Route in die erste ungenutzte Ressource des TCAM hinzufügt; wenn die ungenutzten Ressourcen nicht unter allen TCAM-Ressourcen, die von Host-Routen belegt werden, oder zwischen den letzten TCAM-Ressourcen, die von einer Host-Route belegt werden, und den ersten TCAM-Ressourcen, die von einer Subnetz-Route belegt werden, existieren, dann die erste Anordnungseinheit (44) zu triggern; und
die erste Anordnungseinheit (44) dazu konfiguriert ist, die Subnetz-Routen ab der letzten TCAM-Ressource beginnend sequentiell in den TCAM-Ressourcen des TCAM zu speichern, und nach dem Speichern der Subnetz-Routen die Hinzufügeeinheit (41) so zu triggern, dass sie die hinzuzufügende Host-Route in die erste ungenutzte Ressource des TCAM hinzufügt.

5. Vorrichtung nach Anspruch 4, **dadurch gekennzeichnet, dass** die erste Anordnungseinheit (44) weiter dazu konfiguriert ist, Subnetz-Routen gemäß dem Präfix jeder Subnetz-Route zu sequenzieren; wobei je länger das Präfix der Subnetz-Route ist, desto weiter vorne die Position liegt, an der die Subnetz-Route im TCAM gespeichert wird; und was die Subnetz-Routen mit demselben Präfix anbelangt, die Subnetz-Route mit der längeren abgeglichenen Länge an der vordersten Position im TCAM gespeichert wird.

6. Vorrichtung nach Anspruch 5, **dadurch gekennzeichnet, dass** die Vorrichtung weiter eine dritte Beurteilungseinheit (45), eine vierte Beurteilungseinheit (46) und eine zweite Anordnungseinheit (47) umfasst, wobei
die dritte Beurteilungseinheit (45) dazu konfiguriert ist, zu beurteilen, ob ungenutzte Ressourcen im TCAM existieren, wenn eine Subnetz-Route hinzugefügt wird, und wenn das Beurteilungsergebnis Ja lautet, die vierte Beurteilungseinheit (46) zu triggern;
die vierte Beurteilungseinheit (46) dazu konfiguriert ist, zu beurteilen, ob ungenutzte Ressourcen unter allen TCAM-Ressourcen, die von den Subnetz-Routen belegt werden, oder zwischen der letzten TCAM-Ressource, die von der Host-Route belegt wird, und der ersten TCAM-Ressource, die von der Subnetz-Route belegt wird, existieren, wenn die ungenutzten Ressourcen unter allen TCAM-Ressourcen, die von den Subnetz-Routen belegt werden, oder zwischen der letzten TCAM-Ressource, die von der Host-Route belegt wird, und der ersten TCAM-Ressource, die von der Subnetz-Route belegt wird, existieren, die Hinzufügeeinheit (41) so zu triggern, dass sie die hinzuzufügende Subnetz-Route in die erste ungenutzte Ressource des TCAM hinzufügt; wenn die ungenutzten Ressourcen nicht unter allen TCAM-Ressourcen, die von den Subnetz-Routen belegt werden, oder zwischen der letzten TCAM-Ressource, die von der Host-Route belegt wird, und der ersten TCAM-Ressource, die von der Subnetz-Route belegt wird, existieren, die zweite Anordnungseinheit (47) zu triggern; und
die zweite Anordnungseinheit (47) dazu konfiguriert ist, die Host-Routen ab der ersten TCAM-Ressource des TCAM beginnend sequentiell in den TCAM-Ressourcen des TCAM zu speichern, und die Hinzufügeeinheit (41) nach dem Speichern der Host-Routen so zu triggern, dass sie die hinzuzufügende Subnetz-Route in die erste ungenutzte Ressource des TCAM hinzufügt.

## Revendications

1. Procédé pour conserver une table de routage, le procédé comprenant les étapes suivantes :
lorsque la valeur de hachage d'une route d'hôte à ajouter entre en collision avec la valeur de hachage d'une route dans une table de routage d'hôte, alors l'ajout de la route d'hôte à ajouter dans une mémoire adressable de contenu ternaire, TCAM ;
le stockage de routes d'hôte et de routes de sous-réseau dans différentes sections de ressources de TCAM ;
**caractérisé en ce que** l'étape d'ajout de la route d'hôte à ajouter dans la TCAM comprend spécifiquement :
le fait de juger si des ressources inactives existent dans la TCAM, et si le résultat de jugement est oui, le fait de juger en outre si des ressources inactives existent parmi toutes les ressources de TCAM occupées par les routes d'hôte, ou entre la dernière ressource de TCAM occupée par la route d'hôte et la première ressource de TCAM occupée par la route de sous-réseau ; et
si les ressources inactives existent parmi toutes les ressources de TCAM occupées par les routes d'hôte, ou entre les dernières ressources de TCAM occupées par la route d'hôte et les premières ressources de TCAM occupées par la route de sous-réseau, alors l'ajout de la route d'hôte à ajouter dans la première ressource inactive de la TCAM ; ou
si les ressources inactives n'existent pas parmi toutes les ressources de TCAM occupées par les routes d'hôte, ou entre les dernières ressources de TCAM occupées par la route d'hôte et les premières ressources de TCAM occupées par la route de sous-réseau, alors le stockage de manière séquentielle des routes de sous-réseau dans les ressources de TCAM de la TCAM en démarrant à partir de la dernière ressource de TCAM de la TCAM, et l'ajout de la route d'hôte à ajouter dans la première ressource inactive de la TCAM après le stockage des routes de sous-réseau.

2. Procédé selon la revendication 1, **caractérisé en ce que** l'étape de stockage de manière séquentielle des routes de sous-réseau dans les ressources de TCAM de la TCAM en démarrant à partir de la dernière ressource de TCAM de la TCAM comprend :
le séquencement de routes de sous-réseau selon le préfixe de chaque route de sous-réseau, dans lequel plus le préfixe de la route de sous-réseau est long, plus la position où la route de sous-réseau est stockée dans la TCAM est en avant ; et
pour ce qui est des routes de sous-réseau avec le même préfixe, la route de sous-réseau avec la longueur appariée plus longue est stockée à la position avant dans la TCAM.

3. Procédé selon la revendication 1, **caractérisé en ce que** le procédé comprend en outre :
le fait de juger si des ressources inactives existent dans la TCAM lorsqu'une route de sous-réseau est ajoutée, et si le résultat de jugement est oui, le fait de juger en outre si des ressources inactives existent parmi toutes les ressources de TCAM occupées par les routes de sous-réseau, ou entre la dernière ressource de TCAM occupée par la route d'hôte et la première ressource de TCAM occupée par la route de sous-réseau ; si les ressources inactives existent parmi toutes les ressources de TCAM occupées par les routes de sous-réseau, ou entre la dernière ressource de TCAM occupée par la route d'hôte et la première ressource de TCAM occupée par la route de sous-réseau, l'ajout de la route de sous-réseau à ajouter dans la première ressource inactive de la TCAM ; si les ressources inactives n'existent pas parmi toutes les ressources de TCAM occupées par les routes de sous-réseau, ou entre la dernière ressource de TCAM occupée par la route d'hôte et la première ressource de TCAM occupée par la route de sous-réseau, alors le stockage de manière séquentielle des routes d'hôte dans les ressources de TCAM de la TCAM en démarrant à partir de première ressource de TCAM de la TCAM et l'ajout de la route de sous-réseau à ajouter dans la première ressource inactive de la TCAM après le stockage des routes d'hôte.

4. Appareil pour conserver une table de routage, l'appareil comprenant une unité de détermination (40) et une unité d'ajout (41), dans lequel
l'unité de détermination (40) est configurée pour déterminer si la valeur de hachage d'une route d'hôte à ajouter entre en collision avec la valeur de hachage d'une route dans une table de routage d'hôte et si le résultat de détermination est oui, déclencher l'unité d'ajout (41) ; et
l'unité d'ajout (41) est configurée pour ajouter la route d'hôte à ajouter dans une mémoire adressable de contenu ternaire, TCAM ;
**caractérisé en ce que** les routes d'hôte et les routes de sous-réseau sont stockées dans différentes sections de ressources de TCAM, et **en ce que** l'appareil comprend en outre une première unité de jugement (42), une deuxième unité de jugement (43) et une première unité d'agencement (44), dans lequel
la première unité de jugement (42) est configurée pour juger si des ressources inactives existent dans la TCAM et si le résultat de jugement est oui, déclencher la deuxième unité de jugement (43) ;
la deuxième unité de jugement (43) est configurée pour juger si des ressources inactives existent parmi toutes les ressources de TCAM occupées par des routes d'hôte, ou entre les dernières ressources de TCAM occupées par une route d'hôte et les premières ressources de TCAM occupées par une route de sous-réseau ; et, si les ressources inactives existent parmi toutes les ressources de TCAM occupées par des routes d'hôte, ou entre les dernières ressources de TCAM occupées par une route d'hôte et les premières ressources de TCAM occupées par une route de sous-réseau, déclencher l'unité d'ajout (41) pour ajouter la route d'hôte à ajouter dans la première ressource inactive de la TCAM ; si les ressources inactives n'existent pas parmi toutes les ressources de TCAM occupées par des routes d'hôte, ou entre les dernières ressources de TCAM occupées par une route d'hôte et les premières ressources de TCAM occupées par une route de sous-réseau, alors déclencher la première unité d'agencement (44) ; et
la première unité d'agencement (44) est configurée pour stocker de manière séquentielle les routes de sous-réseau dans les ressources de TCAM de la TCAM en démarrant à partir de la dernière ressource de TCAM, et après le stockage des routes de sous-réseau, déclencher l'unité d'ajout (41) pour ajouter la route d'hôte à ajouter dans la première ressource inactive de la TCAM.

5. Appareil selon la revendication 4, **caractérisé en ce que** la première unité d'agencement (44) est en outre configurée pour séquencer des routes de sous-réseau selon le préfixe de chaque route de sous-réseau ; dans lequel plus le préfixe de la route de sous-réseau est long, plus la position où la route de sous-réseau est stockée dans la TCAM est en avant ; et pour ce qui est des routes de sous-réseau avec le même préfixe, la route de sous-réseau avec la longueur appariée plus longue est stockée à la position avant dans la TCAM.

6. Appareil selon la revendication 5, **caractérisé en ce que** l'appareil comprend en outre une troisième unité de jugement (45), une quatrième unité de jugement (46) et une seconde unité d'agencement (47), dans lequel
la troisième unité de jugement (45) est configurée pour juger si des ressources inactives existent dans la TCAM lorsqu'une route de sous-réseau est ajoutée, et si le résultat de jugement est oui, déclencher la quatrième unité de jugement (46) ;
la quatrième unité de jugement (46) est configurée pour juger si des ressources inactives existent parmi toutes les ressources de TCAM occupées par les routes de sous-réseau, ou entre la dernière ressource de TCAM occupés par la route d'hôte et la première ressource de TCAM occupée par la route de sous-réseau, si les ressources inactives existent parmi toutes les ressources de TCAM occupées par les routes de sous-réseau, ou entre la dernière ressource de TCAM occupée par la route d'hôte et la première ressource de TCAM occupée par la route de sous-réseau, déclencher l'unité d'ajout (41) pour ajouter la route de sous-réseau à ajouter dans la première ressource inactive de la TCAM ; si les ressources inactives n'existent pas parmi toutes les ressources de TCAM occupées par les routes de sous-réseau, ou entre la dernière ressource de TCAM occupée par la route d'hôte et la première ressource de TCAM occupée par la route de sous-réseau, déclencher la seconde unité d'agencement (47) ; et
la seconde unité d'agencement (47) est configurée pour stocker de manière séquentielle les routes d'hôte dans les ressources de TCAM de la TCAM en démarrant à partir de la première ressource de TCAM de la TCAM, et pour déclencher l'unité d'ajout (41) après le stockage des routes d'hôte pour ajouter la route de sous-réseau à ajouter dans la première ressource inactive de la TCAM.
